# EUROPÄISCHE PATENTSCHRIFT

(11) **EP 0 830 888 B1**
(45) Veröffentlichungstag und Bekanntmachung des Hinweises auf die Patenterteilung: **31.07.2002**
(21) Anmeldenummer: 97115556.9
(22) Anmeldetag: 08.09.1997
(51) Int. Cl.: B01D 53/86, B01J 37/02, B01J 38/00, B01J 38/64, B01J 23/22

(54) **Verwendung eines Katalysators sowie Reinigungsverfahren für einen derart verwendeten Katalysator**
Use of a catalyst and process for cleaning a used catalyst
Utilisation d'un catalyseur et procédé pour la purification d'un catalyseur utilisé

(30) Priorität: 19.09.1996 DE 19638423
(43) Veröffentlichungstag der Anmeldung: 25.03.1998
(73) Patentinhaber: SIEMENS AKTIENGESELLSCHAFT, 80333 München (DE)
(72) Erfinder: Hums, Erich, Dr., 91093 Hessdorf (DE); Sigling, Ralf, Dipl.-Ing., 91083 Baiersdorf (DE)

(56) Entgegenhaltungen:
- EP-A- 0 211 443
- WO-A-97/02092
- DE-A- 3 813 312
- DE-A- 3 916 398

## Beschreibung

Die Erfindung bezieht sich auf die Verwendung eines Katalysators mit einer durch thermisches Spritzen aufgebrachten katalytisch aktiven Oberfläche zur Schadstoffreduktion in einem mit einer Schwermetallkomponente beladenen Abgas sowie auf ein Reinigungsverfahren für einen derart verwendeten und infolgedessen mit der Schwermetallkomponente beaufschlagten Katalysator.

Zur Schadstoffreduktion in einem Abgas einer Verbrennungsanlage, z.B. einem Heizkraftwerk, einer Müllverbrennungsanlage oder einem diesel- oder benzingetriebenen Verbrennungsmotor, sind Katalysatoren unterschiedlichster Bauweise und Zusammensetzung bekannt. So werden zur Stickoxidminderung Katalysatoren eingesetzt, welche nach dem Verfahren der Selektiven Katalytischen Reduktion (SCR) unter Zuhilfenahme eines Reduktionsmittels, z.B. Ammoniak, Stickoxide zu molekularem Stickstoff und Wasser reduzieren. Des weiteren werden Katalysatoren zur Oxidation von organischen Schadstoffen wie Dioxinen und Furanen verwendet.

Beispielhaft für den Aufbau eines derartigen Katalysators zur Schadstoffreduktion sei ein Katalysator auf Titanoxid-Basis genannt, welcher zusätzlich Beimengungen von Wolframoxid und/oder Vanadiumoxid aufweist. Ein derartiger Katalysator läßt sich herstellen, indem ein geeigneter Tragkörper in eine Aufschlämmung der katalytisch aktiven Masse getaucht, getrocknet und anschließend kalziniert wird. Es ist ebenso bekannt, den Tragkörper durch thermisches Spritzen eines entsprechenden Spritzmaterials mit einer katalytisch aktiven Oberfläche zu versehen. Katalysatoren mit einer durch thermisches Spritzen aufgebrachten katalytisch aktiven Oberfläche sind z.B. aus der DE 38 13 312 A1, der DE 39 16 398 , der WO 9702092 und der EP-A-0 211 443 bekannt.

Jeder fossile Brennstoff enthält, abhängig von der Lagerstätte, einen gewissen Anteil an eingelagerten Spurenelementen, z.B. Alkali-, Erdalkali-Elemente und Schwermetalle, wie z.B. Kupfer, Blei, Vanadium und Arsen, in gebundener Form. Insbesondere trifft dies für naturbelassene Fossilbrennstoffe wie Kohle, Schweröl und Erdöl zu. Aufgrund dieser Tatsache sind die bei der Veredlung derartiger Fossilbrennstoffe anfallenden Raffinerierückstände in besonderem Maße mit Schwermetallen beladen. Auch von Hausmüll ist bekannt, daß dieser derartige Schwermetallkomponenten beinhaltet. Bei der Verbrennung der aufgeführten Stoffe, z.B. in einem Fossil-Kraftwerk oder einer Müllverbrennungsanlage, wird ein Teil der eingelagerten Schwermetalle als flüchtige Schwermetallkomponenten freigesetzt, welche sich dem Abgas einer derartigen Verbrennungsanlage beimischen. Diese flüchtigen Schwermetallkomponenten des Abgases können zu einer schwer beseitigbaren Ablagerung in nachgeschalteten Anlagenteilen führen. Insbesondere bei einem direkt im Abgas angeordneten Katalysator führt eine derartige Ablagerung an der Katalysatoroberfläche zu einer erheblichen Beeinträchtigung der katalytischen Aktivität. Zusätzlich kann dadurch die Konversionsrate unerwünschter Nebenreaktionen drastisch erhöht werden. Beispielsweise ist es bekannt, daß die Ablagerung von Vanadium und/oder Vanadiumoxid (z.B. V₂O₅) an einem Katalysator zur Stickoxidreduktion zu einer erheblichen Steigerung der unerwünschten Konversion von Schwefeldioxid (SO₂) zu Schwefeltrioxid (SO₃) führt. Durch die daraus eventuell gebildete Schwefelsäure führt dies zu erheblichen Korrosionsproblemen an dem Katalysator nachgeschalteten Anlagenteilen. Häufig ist deshalb die Standzeit eines Katalysators in derartigen Verbrennungsanlagen nicht durch die natürliche Alterung des Katalysators, sondern durch die Menge der Ablagerung an der Katalysatoroberfläche begrenzt.

Ein mechanisches Reinigen der Katalysatoroberfläche ohne Zerstörung derselben ist in der Regel nicht möglich, da zum einen aufgrund der hohen spezifischen Oberfläche des Katalysators die Schwermetallablagerung bevorzugt dort niedergeschlagen wird, und zum anderen eine teilweise Diffusion der Schwermetallkomponente in das Katalysatormaterial erfolgt. Auch ein hochaktiver Katalysator mit einer dementsprechend niedrigen spezifischen Oberfläche kann dieses Problem nicht lösen, da ein solcher Katalysator an sich auch eine relativ hohe Aktivität für die Umsetzung unerwünschter Nebenreaktionen besitzt.

Aufgabe der Erfindung ist es, einen Katalysator zur Verwendung in einem mit einer Schwermetallkomponente beladenen Abgas einer Verbrennungsanlage zur Schadstoffreduktion anzugeben, welcher trotz einer Schwermetallablagerung eine lange Standzeit aufweist. Ferner ist es Aufgabe der Erfindung, ein Reinigungsverfahren für einen derart verwendeten Katalysator anzugeben.

Die Aufgabe bezüglich des Katalysators wird erfindungsgemäß durch die Verwendung eines Katalysators mit einer durch thermisches Spritzen aufgebrachten katalytisch aktiven Oberfläche zur Schadstoffreduktion in einem mit einer Schwermetallkomponente beladenen Abgas einer Verbrennungsanlage gelöst.

Die Erfindung geht dabei von der Erkenntnis aus, daß ein durch thermisches Spritzen hergestellter Katalysator gegenüber einem herkömmlichen Katalysator eine längere Lebensbzw. Standzeit aufweist. Die lange Standzeit verdankt ein derartiger Katalysator der hohen Abriebfestigkeit der aufgebrachten katalytisch aktiven Oberfläche. Die hohe Abriebfestigkeit ist eine direkte Folge der beim thermischen Spritzen entstehenden intensiven Vernetzung der einzelnen Komponenten der Oberfläche sowohl untereinander als auch mit dem Material des verwendeten Tragkörpers. Aufgrund dieser Eigenschaft kann eine Schwermetallablagerung auf der Oberfläche eines solchen Katalysators leicht mechanisch entfernt werden, ohne daß dabei die katalytische Oberfläche des Katalysators zerstört bzw. von der Tragstruktur abgerieben wird. Umfangreiche Untersuchungen haben ergeben, daß für einen durch thermisches Spritzen hergestellten Katalysator ein im wesentlichen vollständiges Entfernen einer Schwermetallablagerung möglich ist, ohne dessen katalytische Aktivität merklich zu beeinträchtigen.

Wird ein durch thermisches Spritzen hergestellter Katalysator zur Stickoxidreduktion in einem Abgaskanal einer Verbrennungsanlage eingesetzt, deren Abgas mit einer Schwermetallkomponente beladen ist, so muß ein solcher Katalysator bei einer Abnahme seiner katalytischen Aktivität bzw. bei einer Zunahme der Konversionsrate unerwünschter Nebenreaktionen infolge einer Schwermetallbeladung nicht ausgetauscht werden, sondern kann einfach mechanisch gereinigt werden. Auf diese Weise lassen sich die Betriebskosten für eine derart ausgerüstete Verbrennungsanlage drastisch senken. Auch ist eine mehrmalige Reinigung des Katalysators vorstellbar.

Da die Reinigung eines derart eingesetzten Katalysators wesentlich günstiger ist als ein vollständiger Austausch, kann das Reinigen in einem sehr viel kürzeren zeitlichen Abstand wiederholt werden als ein Austausch des Katalysators. Eine durch die Schwermetallablagerung auf der Katalysatoroberfläche begünstige Nebenreaktion wie z.B. die Umsetzung von Schwefeldioxid (SO₂) in Schwefeltrioxid (SO₃) kann dadurch zu einem frühen Zeitpunkt rechtzeitig unterbunden werden. Auf diese Weise lassen sich z.B. Korrosionsschäden an den dem Katalysator nachgeschalteten Anlagenteilen erheblich reduzieren.

Besonders die Verbrennung von Erdöl oder Schweröl, aber auch von Raffinerierückständen führt zu einer hohen Konzentration an Vanadium und/oder Vanadiumoxid in dem entstehenden Abgas. Die Verwendung eines durch thermisches Spritzen hergestellten Katalysators in einer Verbrennungsanlage, in welcher als Brennstoff Öl oder Schweröl eingesetzt wird oder Raffinerierückstände verbrannt werden, ist deshalb besonders vorteilhaft.

Die Aufgabe hinsichtlich des Reinigungsverfahrens wird erfindungsgemäß dadurch gelöst, daß eine Schwermetallablagerung auf der Oberfläche eines durch thermisches Spritzen hergestellten Katalysators, welcher in einem mit einer Schwermetallkomponente beladenen Abgas verwendet worden ist, mechanisch abgestreift und/oder unter Zuhilfenahme einer vorzugsweise alkalischen Lösung abgewaschen wird.

Da wie bereits erwähnt die katalytisch aktive Oberfläche eines durch thermisches Spritzen hergestellten Katalysators besonders abriebfest ist, kann ohne Probleme die beaufschlagte Schwermetallablagerung mechanisch abgestreift werden, ohne daß es zu einer Schädigung der aktiven Oberfläche kommt. Besonders effektiv läßt sich die Schwermetallkomponente entfernen, wenn die Katalysatoroberfläche mit einer vorzugsweise alkalischen Lösung abgewaschen oder abgespritzt wird. Insbesondere durch eine alkalisch gestellte Lösung wird erreicht, daß die sich an der Oberfläche des Katalysators befindlichen Schwermetalle in Lösung gehen. So läßt sich eine nahezu vollständige Wiederherstellung der ursprünglichen katalytischen Aktivität des Katalysators erreichen.

Ein Ausführungsbeispiel der Erfindung wird anhand einer Zeichnung näher erläutert. Dabei zeigen:
- FIG 1: die Verwendung eines flammgespritzten Katalysators in einem Abgaskanal einer Verbrennungsanlage und
- FIG 2: schematisch ein Reinigungsverfahren für einen mit einer Schwermetallkomponente beladenen flammgespritzten Katalysator.

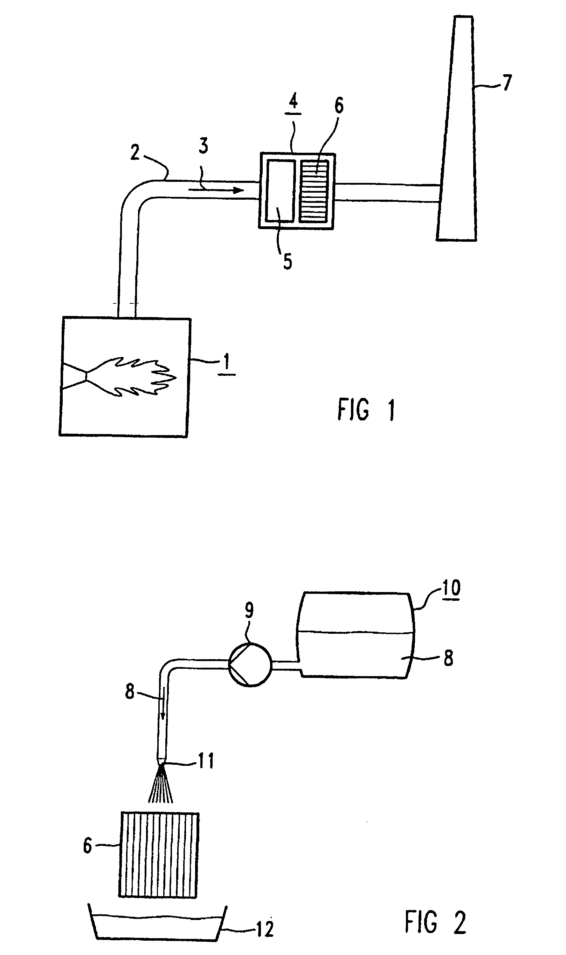

Die in Figur 1 dargestellte Verbrennungsanlage umfaßt eine Brennkammer 1 mit einem daran angeschlossenen Abgaskanal 2, welcher in einen Kamin 7 mündet. In den Abgaskanal 2 ist ein von dem Abgas 3 der Brennkammer 1 durchströmtes Abgasreinigungssystem 4 geschaltet, weiches eine Aufbereitungskomponente 5 und einen Katalysator 6 zur Entstickung des Abgases 3 umfaßt. Der Brennkammer 1, welche als eine Trockenfeuerungs-, oder als eine Schmelzkammer eines Fossilkraftwerks ausgebildet sein kann, werden - in der Zeichnung nicht dargestellt-Raffinerierückstände zur Verbrennung angeboten. Entsprechend weist das Abgas 3 einen hohen Anteil an flüchtigen Schwermetallkomponenten, insbesondere an Vanadiumoxid V₂O₅, auf und setzt sich wie folgt zusammen:
9 Vol.-%O₂,
24 Vol.-% H₂O,
100 mg/Nm³ SO₂,
650 mg/Nm³ NOx,
100 mg/Nm³ CO sowie
< 100 mg/Nm³ V₂O₅

Die übrigen Schwermetallkomponenten des Abgases 3 sind nicht weiter aufgeführt. Das Abgas wird zur Entstickung über das Abgasreinigungssystem 4 geleitet und über den Kamin 7 abgeblasen. Der für den katalytischen Abbau der Stickoxide vorgesehene Katalysator 6 ist ein sogenannter DeNOx-Katalysator, welcher aus einer in einem Elementkasten angeordneten Anzahl von parallelen Platten aus einem Chrom-Aluminium-Stahl besteht. Jede dieser Platten ist beidseitig mit einer durch thermisches Spritzen aufgetragenen katalytisch aktiven Oberfläche mit einer Schichtstärke von etwa 50 g/m² versehen. Die katalytisch aktive Oberfläche enthält 8 Gew.-% MoO₃, 0,5 Gew.-% V₂O₅, 65 Gew.-% TiO₂ sowie als Rest Al₂O₃. In der Aufbereitungskomponente 5 wird das Abgas 3 mit einem Reduktionsmittel, z.B. Ammoniak, versehen und mit diesem homogen vermischt. Hierfür kann eine Reduktionsmitteleindüsung mit einem nachgeschalteten statischen Mischer vorgesehen sein.

Während des Betriebs der Verbrennungsanlage lagert sich das in dem Abgas 3 enthaltene Vanadiumoxid V₂O₅ auf der Oberfläche des Katalysators 6 ab. Mit fortschreitender Betriebsdauer führt eine derartige Ablagerung zu einer Abnahme der katalytischen Aktivität des Katalysators 6 für die Stickoxidumsetzung und zu einer Erhöhung der katalytischen Aktivität für die Umsetzung von Schwefeldioxid SO₂ in Schwefeltrioxid SO₃. Eine hohe SO₂/SO₃-Konversionsrate führt jedoch wegen der eventuellen Bildung von Schwefelsäure in nachgeschalteten Anlagenteilen zu erheblichen Korrosionsproblemen.

Eine Reinigung des Katalysators 6 ist dementsprechend vorgesehen, wenn entweder die katalytische Aktivität des Katalysators 6 für die Umsetzung der Stickoxide unter einen bestimmten Grenzwert gefallen oder die katalytische Aktivität für die Konversion von SO₂ in SO₃ über einen bestimmten oberen Grenzwert gestiegen ist. Die Festlegung der Grenzwerte kann dabei anlagenspezifisch vorgenommen werden. Der Grad der V₂O₅-Ablagerung auf der Katalysatoroberfläche kann mit Hilfe von geeigneten Sensoren, welche die Stickoxid-, die Reduktionsmittel- oder die Schwefeltrioxid-Konzentration in dem Abgas 3 hinter dem Katalysator 6 messen, erfaßt werden.

Zur Entfernung der V₂O₅-Ablagerung von der Oberfläche des Katalysators 6 wird gemäß Figur 2 eine ammoniakalkalisch gestellte wässrige Lösung 8 mit einem pH-Wert von 7,5 bis 8,5 verwendet. Hierzu wird die sich in einem Vorratsbehälter 10 befindliche alkalische Lösung 8 mit Hilfe einer Pumpe 9 verdichtet und über eine Düse 11 über den Katalysator 6 gespritzt. Die Platten des Katalysators 6 sind dabei parallel zur Spritzrichtung der alkalischen Lösung 8 ausgerichtet. Infolge des hohen pH-Wertes der Lösung 8 wird das sich auf der Oberfläche des Katalysators 6 befindliche V₂O₅ gelöst und infolgedessen von der Oberfläche entfernt. Die Lösung 8 wird schließlich zusammen mit dem gelösten Vanadium in dem Auffangbehälter 12 gesammelt und entsprechend entsorgt.

## Patentansprüche

1. Verwendung eines Katalysators (6) mit einer durch thermisches Spritzen aufgebrachten katalytisch aktiven Oberfläche zur Schadstoffreduktion in einem mit einer Schwermetallkomponente beladenen Abgas (3) einer Verbrennungsanlage.

2. Verwendung nach Anspruch 1,
wobei die Schwermetallkomponente des Abgases (3) Vanadium und/oder ein Vanadiumoxid umfaßt.

3. Reinigungsverfahren für einen mit einer Schwermetallkomponente beaufschlagten Katalysator (6) mit einer durch thermisches Spritzen aufgebrachten katalytisch aktiven Oberfläche, bei dem die Schwermetallkomponente mechanisch abgestreift und/oder unter Zuhilfenahme einer vorzugsweise alkalischen Lösung (8) abgewaschen wird.

## Claims

1. Use in a combustion-plant waste gas (3) laden with a heavy-metal component of a catalyzer (6) with a catalytically active surface for pollution abatement which has been applied by thermal spraying.

2. Use according to Claim 1,
wherein the heavy-metal component of the waste gas (3) comprises vanadium and/or a vanadium oxide.

3. A cleaning process for a catalyzer (6) that has been subjected to a heavy-metal component and that has a catalytically active surface which has been applied by thermal spraying, wherein the heavy-metal component is scraped off mechanically and/or is washed off with the aid of a preferably alkaline solution (8).

## Revendications

1. Utilisation d'un catalyseur (6) ayant une surface active catalytiquement déposée par revêtement au pistolet et destinée à réduire les substances polluantes dans des gaz d'échappement (3) chargés de constituants de métal lourd d'une installation de combustion.

2. Utilisation suivant la revendication 1, dans laquelle les constituants de métal lourd des gaz d'échappement (3) comprennent le vanadium et/ou un oxyde de vanadium.

3. Procédé de nettoyage d'un catalyseur (6) chargé de constituants de métal lourd et ayant une surface active catalytiquement déposée par revêtement au pistolet, dans lequel on racle mécaniquement les constituants de métal lourd et/ou on les élimine par lavage en s'aidant d'une solution (8), de préférence alcaline.
